# EUROPEAN PATENT APPLICATION

(11) **EP 4 693 426 A1**
(43) Date of publication of application: **11.02.2026**
(21) Application number: 24886338.3
(22) Date of filing: 01.11.2024
(51) Int. Cl.: H01M 4/04, H01M 4/1395, H01M 4/134, H01M 4/70, H01M 10/0583, H01M 50/536, H01M 4/02

(54) **ELECTRODE PLATE FOR SECONDARY BATTERY, BATTERY CELL COMPRISING ELECTRODE PLATE FOR SECONDARY BATTERY, AND METHOD FOR MANUFACTURING ELECTRODE PLATE FOR SECONDARY BATTERY**

(30) Priority: 02.11.2023 KR 20230150055
(71) Applicant: LG Energy Solution, Ltd., Seoul 07335 (KR)
(72) Inventor: SONG, Ji Eun, Daejeon 34122 (KR); LEE, Hyun Soo, Daejeon 34122 (KR); KIM, Yun Jung, Daejeon 34122 (KR); HAN, Sueng Hoon, Daejeon 34122 (KR)
(74) Representative: Goddar, Heinz J.
(86) International application number: PCT/KR2024/017026
(87) International publication number: WO 2025/095667

(57) **Abstract**

An electrode plate for a secondary battery includes an electrode plate body which is made of a metal material and has at least one electrode tab disposed at the edge of one side; and a reinforcing member which is inserted into and coupled to the electrode plate body and has a plurality of voids, wherein at least some of the plurality of voids are filled with the metal material forming the electrode plate body.

## Description

### Technical Field

The present disclosure relates to an electrode plate for a secondary battery, a battery cell including the same and a method of manufacturing the electrode plate for the secondary battery.

### BACKGROUND ART

Unlike primary batteries, secondary batteries may be charged and discharged, so they may be applied to various fields such as digital cameras, mobile phones, laptops, hybrid cars, and electric vehicles. The secondary batteries include nickel-cadmium batteries, nickel-metal hydride batteries, and nickel-hydrogen batteries. Recently, lithium ion batteries have been widely used.

In the case of an existing lithium ion battery, in a negative electrode or a positive electrode, copper, aluminum foil and the like are used as a metal current collector and the negative electrode or the positive electrode is manufactured by lamination of a negative electrode active material or a positive electrode active material on both surfaces thereof.

In contrast, in the case of lithium sulfur batteries (Li-S batteries) or lithium metal batteries (Li-Metal batteries), which are next-generation batteries, a negative electrode may be made of a lithium metal itself. In this case, the lithium metal constituting a negative electrode plate has lower mechanical strength than a metal current collector of an existing negative electrode, so there is a risk of being easily deformed or broken during a manufacturing process of the negative electrode. In particular, there was a problem in that an electrode tab of the negative electrode made of the lithium metal was pressed and spread out by pressure during a welding process with a lead tab, causing interference with other components of a battery cell or easily sticking to a welder.

### Detailed Description of the Invention

### Technical Goals

The present disclosure is designed to address at least some of the problems of the related art described above and thus to provide an electrode plate for a secondary battery made of a lithium metal and having excellent mechanical strength, and a battery cell including the same.

Additionally, a goal of the present disclosure is to provide an electrode plate for a secondary battery that may increase the efficiency of a manufacturing process of a battery cell and the battery cell including the same.

Additionally, a goal of the present disclosure is to provide an electrode plate for a secondary battery that may significantly improve the weldability between an electrode tab and a lead tab, the tensile strength of a weld part, and a battery cell including the same.

### Technical solutions

In order to achieve the above goals, in exemplary embodiments of the present disclosure, there is provided a method of manufacturing an electrode plate for a secondary battery including supplying a first base material made of a metal material, supplying a second base material having a mesh structure provided with a plurality of pore parts, aligning the second base material on one surface of the first base material, and pressing the first base material and the second base material with a pressing member, wherein the second base material is pressed into the first base material.

In exemplary embodiments, in the pressing, as the second base material is pressed into the first base material, the metal material forming the first base material may fill at least some of the plurality of pore parts.

In exemplary embodiments, the one surface of the first base material may be divided into a first region and a second region along a width direction of the first base material, and in the aligning, the second base material may be aligned on the first region so as not to overlap the second region of the first base material.

In exemplary embodiments, the method of manufacturing the electrode plate for the secondary battery may further include tab forming in which an electrode tab is formed by removing a scrap area formed on the first region of the first base material, and the tab forming may be performed after the pressing.

In the method of manufacturing the electrode plate for the secondary battery according to exemplary embodiments, the metal material may be lithium or an alloy including lithium.

In exemplary embodiments, there is provided an electrode plate for a secondary battery including an electrode plate body part made of a metal material and having one or more electrode tabs placed at one edge and a reinforcing member having a plurality of pore parts being inserted into and coupled to the electrode plate body part, and the metal material forming the electrode plate body part fills at least one of the plurality of pore parts.

In exemplary embodiments, the reinforcing member may include a tab reinforcement part coupled to one or more electrode tabs.

In exemplary embodiments, one surface of the electrode plate body part may be divided into a first region formed along the one edge at which the one or more electrode tabs are placed and a second region formed along an edge opposite to the one edge, and the reinforcing member may be inserted and coupled to the first region.

In exemplary embodiments, the metal material of the electrode plate body part may cover both one surface of the reinforcing member and another surface opposite to the one surface.

In exemplary embodiments, a portion of the reinforcing member may have a state exposed on the one surface of the electrode plate body part.

In the electrode plate for the secondary battery according to exemplary embodiments, the metal material may be lithium or an alloy including lithium.

In exemplary embodiments, there is provided a battery cell including an electrode assembly including one or more positive electrode plates, one or more negative electrode plates, and one or more separators placed between the one or more positive electrode plates and the one or more negative electrode plates, and a case in which the electrode assembly is accommodated, and the one or more negative electrode plates are composed of the electrode plate for the secondary battery as described above.

In exemplary embodiments, at least one of the one or more negative electrode plates may be formed by bending one sheet of the electrode plate for the secondary battery a plurality of times.

In exemplary embodiments, the battery cell may further include a lead tab coupled to the electrode tab of the one or more negative electrode plates by ultrasonic welding.

### Effects of the Invention

According to an electrode plate for a secondary battery and a battery cell including the same of exemplary embodiments, a negative electrode plate made of a lithium metal and having excellent mechanical strength may be implemented.

Additionally, according to an electrode plate for a secondary battery and a battery cell including the same of exemplary embodiments, the efficiency of a manufacturing process of the battery cell may be increased.

In particular, according to an electrode plate for a secondary battery and a battery cell including the same of exemplary embodiments, the weldability between an electrode tab and a lead tab and the tensile strength of a weld part may be significantly improved.

### BRIEF DESCRIPTION OF DRAWINGS

FIG. 1 is an exploded perspective view of a battery cell according to exemplary embodiments.
FIG. 2 is an exemplary cross-sectional view of an electrode assembly taken along section I-I' of FIG. 1.
FIG. 3 is an exploded perspective view of an electrode plate for a secondary battery according to an exemplary embodiment.
FIG. 4 is an enlarged view of part A of FIG. 3.
FIG. 5 is exemplary cross-sectional view of an electrode plate for a secondary battery according to an exemplary embodiment.
FIG. 6 is an exploded perspective view of an electrode plate for a secondary battery according to another exemplary embodiment.
FIG. 7 is reference diagram illustrating an electrode tab according to exemplary embodiments and an electrode tab according to a comparative example, each in combination with a lead tab.
FIG. 8 illustrates an exemplary configuration of a manufacturing apparatus of an electrode plate for a secondary battery to produce the electrode plate for the secondary battery according to exemplary embodiments.
FIG. 9 illustrates an electrode tab being formed at an electrode plate for a secondary battery according to exemplary embodiments.

### Mode for Carrying Out the Invention

Prior to the detailed description of the present disclosure, terms or words used in this specification and claims is not to be understood as limited to their common or dictionary meanings, and it is to be interpreted as meaning and concept consistent with the technical idea of the present disclosure based on the principle that the inventor may appropriately define the concept of terms in order to explain his or her invention in the best way. Therefore, it is understood that the exemplary embodiments described in this specification and the configurations illustrated in the drawings are one of the most desired exemplary embodiments of the present disclosure and does not represent the entire technical idea of the present disclosure, so various equivalents and modification examples that may replace them at the time of filing the present application may exist.

Like reference numerals or letters in each drawing attached to the specification refer to components or elements performing substantially like functions. For convenience of description and understanding, the same reference numeral or letter may be used for description in different exemplary embodiments. In other words, even though elements with the same reference numeral are illustrated in a plurality of drawings, all of the plurality of drawings do not represent a single example embodiment.

In the descriptions below, a singular expression includes a plural expression unless apparently otherwise defined by context. In the present disclosure, it is to be understood that terms such as "comprise or include" and "consist of" are intended to indicate the presence of a feature, a number, a step, an operation, an element, a component, or a combination thereof which are described in the specification and not intended to previously exclude the possibility of the presence or addition of one or more other features, numbers, steps, operations, elements, components, or combinations thereof.

In addition, expressions such as upper side, upper part, lower side, lower part, side surface, front surface, and rear surface hereinafter are represented based on a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, an element bonded with an ordinal number is not to be construed as the using order or arrangement order thereof is limited by the ordinal number. In some cases, each ordinal number may also be used by replacing each other.

Hereinafter, the exemplary embodiments of the present disclosure will be described with reference to the attached drawings. However, the idea of the present disclosure is not limited to the presented exemplary embodiments. For example, a person skilled in the art who construes the spirit of the present disclosure may suggest other exemplary embodiments that are within the scope of the spirit of the present disclosure through addition, change, or deletion of elements, but this will also be included within the scope of the spirit of the present disclosure. The shapes and sizes of the elements in the drawings may be exaggerated for clearer explanation.

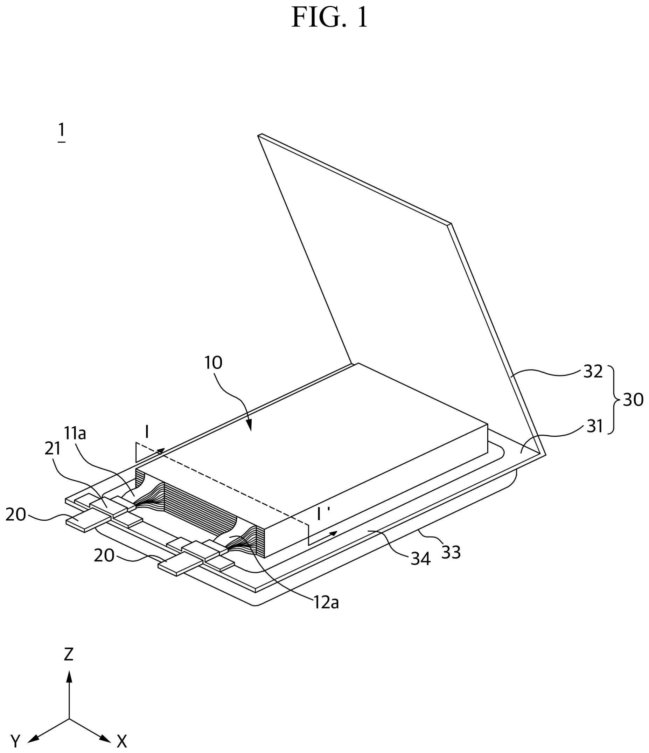

FIG. 1 is an exploded perspective view of a battery cell 1 according to exemplary embodiments.

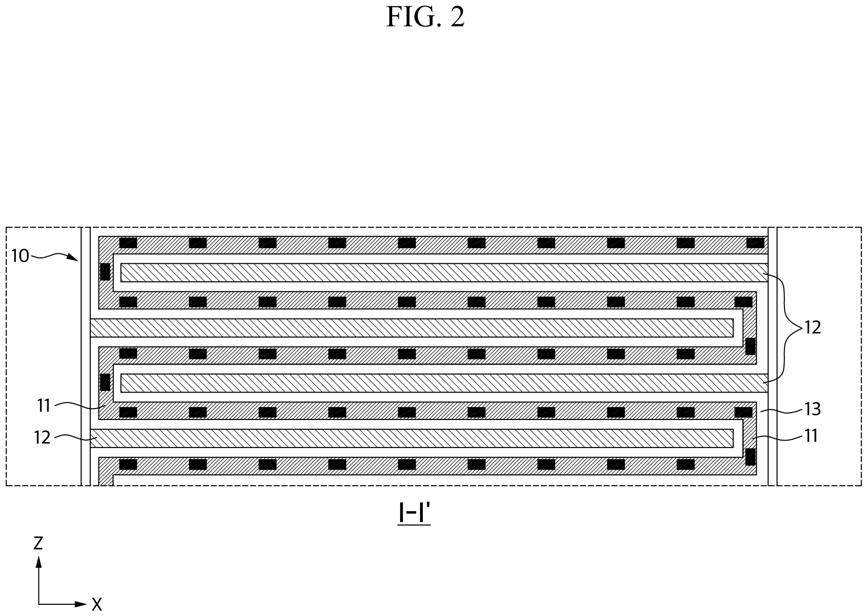

FIG. 2 is an exemplary cross-sectional view of an electrode assembly 10 taken along section I-I' of FIG. 1.

The battery cell 1 may include an electrode assembly 10 in which a plurality of electrode plates 11, 12 are stacked, a case 30 in which the electrode assembly 10 is accommodated and a lead tab 20 electrically connected to the electrode assembly 10 and having a portion exposed to the outside of the case 30.

The case 30 may include an electrode accommodating part 33 in which the electrode assembly 10 is accommodated and a sealing part 34 located along an edge of the electrode accommodating part 33. The electrode accommodating part 33 may be formed by an upper case 30 and a lower case 30 being joined up and down and may have an internal space in which the electrode assembly 10 is accommodated. The sealing part 34 may be formed by pressing or heat-sealing edges of the upper case 30 and the lower case 30 along the edge of the electrode accommodating part 33 and may block external foreign substances or moisture from the case 30 from flowing into the electrode assembly 10 accommodated inside the electrode accommodating part 33.

The case 30 may be the case 30 in the form of a pouch made of a soft material. For example, the case 30 may be made of an aluminum laminate sheet. However, in addition to the pouch-type case 30 described above, the case of the battery cell 1 according to exemplary embodiments may also be composed of a can-type (or square-type) case or a cylindrical type case made of the metal material such as aluminum.

The electrode assembly 10 may have a structure in which one or more negative electrode plates 11 and one or more positive electrode plates 12 that have opposite polarities are stacked with a separator 13 interposed therebetween.

The separator 13 may be interposed between the negative electrode plate 11 and the positive electrode plate 12 and may be configured to prevent electrical short-circuiting between the negative electrode plate 11 and the positive electrode plate 12 and to allow electrolyte to be impregnated so that ions may pass therethrough. The separator 13 may be made of a porous polymer film or a porous non-woven base material. However, a material of the separator 13 may be used without particular limitation as long as it is a material commonly used in a lithium secondary battery in addition to the above material.

The negative electrode plate 11 and the positive electrode plate 12 may be provided with electrode tabs 11a, 12a, respectively. The electrode tabs 11a, 12a may be coupled to the lead tab 20 serving as a terminal in the battery cell 1 and thus the electrode assembly 10 and the lead tab 20 may be electrically connected to each other. Various welding techniques, including ultrasonic welding, or physical fastening techniques using a rivet or the like, may be applied to the coupling between the electrode tabs 11a, 12a and the lead tab 20.

The lead tab 20 may be made of a conductive metal material. For example, the lead tab 20 may be made of nickel, copper, nickel-plated copper, aluminum, and the like. An insulating member 21 may be placed between the lead tab 20 and the case 30. For example, the insulating member 21 may be made of a material that has both an insulating property and an adhesive property and may be joined to the sealing part 34 of the case 30 while encompassing a portion of the lead tab 20 to ensure electrical insulation between the lead tab 20 and the case 30 and to prevent sealing performance between the lead tab 20 and the sealing part 34 from being impaired.

The positive electrode plate 12 may have a structure in which a positive electrode active material layer is formed on a current collector. For example, the positive electrode plate 12 may be formed by applying a mixture of a positive electrode active material, a conductive material, and a binder to a current collector made of an aluminum alloy. In this case, any known material used in a lithium secondary battery may be applied to a material for the positive electrode active material, the binder, the conductive material, and the current collector.

The negative electrode plate 11 of the battery cell 1 according to exemplary embodiments may be made of a lithium metal sheet, unlike an existing negative electrode plate.

The existing negative electrode plate may have a structure in which a negative electrode active material layer is formed on a current collector. For example, the negative electrode plate may be formed by applying a mixture of a negative electrode active material, a conductive material, and a binder to a current collector made of a copper alloy.

In contrast, the negative electrode plate 11 of the battery cell 1 according to exemplary embodiments may have an integrated electrode plate structure made of the lithium metal sheet. The lithium metal sheet is a flat sheet member made of a lithium metal (in other words, lithium or an alloy material including lithium), and the negative electrode plate 11 and the negative electrode tab 11a formed at one side of the negative electrode plate 11 according to exemplary embodiments may be implemented by appropriately processing the shape of the lithium metal sheet.

Since the battery cell 1 to which the negative electrode plate 11 made of the lithium metal sheet is applied may omit an existing metal current collector made of nickel (Ni), aluminum (Al), copper (Cu), and the like, the battery cell 1 may be not only advantageous for reducing the weight thereof but may also have a very high energy density.

However, when the negative electrode plate 11 is made of only the lithium metal without a metal current collector, there are risks of being easily wrinkled or being broken during a manufacturing process of the negative electrode plate 11 due to a low mechanical strength of lithium and of frequent problems with the adhesion of lithium to a manufacturing apparatus, causing inefficiency in the manufacturing process.

In particular, when the electrode tab 11a of the negative electrode plate 11 is made of the lithium metal, there is a risk that during an ultrasonic welding process to couple the electrode tab 11a and the lead tab 20, the electrode tab 11a may be pressed and spread out and short-circuited with other components (for example, the electrode tab 12a of the positive electrode plate 12 or the case 30, and the like) of the battery cell or that the lithium metal of the electrode tab 11a may stick to a welding device.

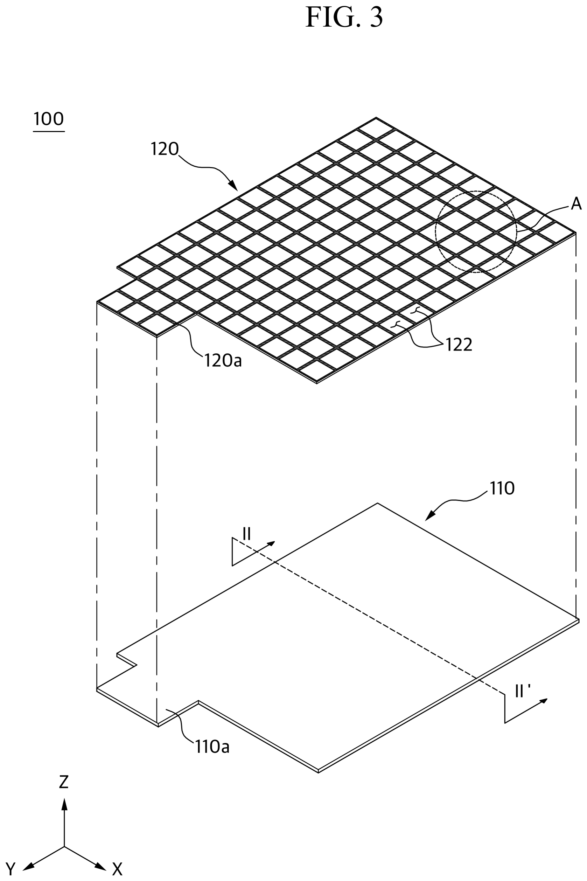

In order to solve these problems, the negative electrode plate 11 according to exemplary embodiments may be manufactured as an electrode plate for a secondary battery described through FIGS. 3 to 5. Accordingly, the negative electrode plate 11 may have a structure in which a reinforcing member is coupled and mechanical strength including tensile strength may be significantly increased.

Hereinafter, referring to FIGS. 3 to 5, an electrode plate 100 for a secondary battery used to manufacture the electrode assembly 10 of the battery cell 1 will be described in detail.

FIG. 3 is an exploded perspective view of an electrode plate 100 for the secondary battery according to an exemplary embodiment.

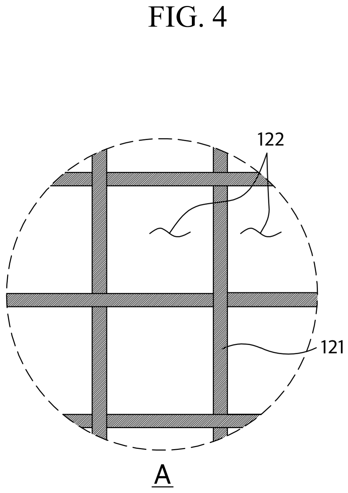

FIG. 4 is an enlarged view of part A of FIG. 3.

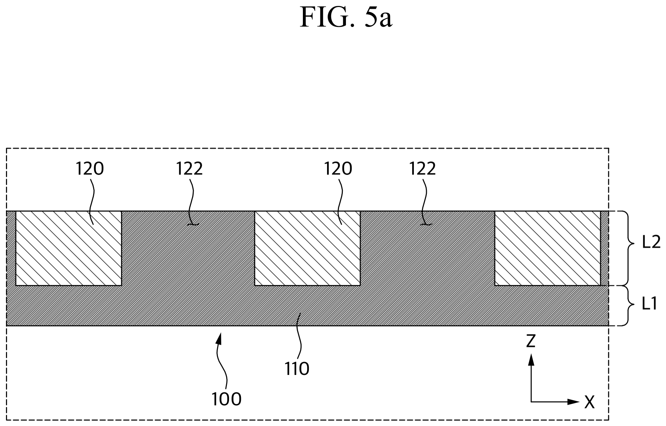

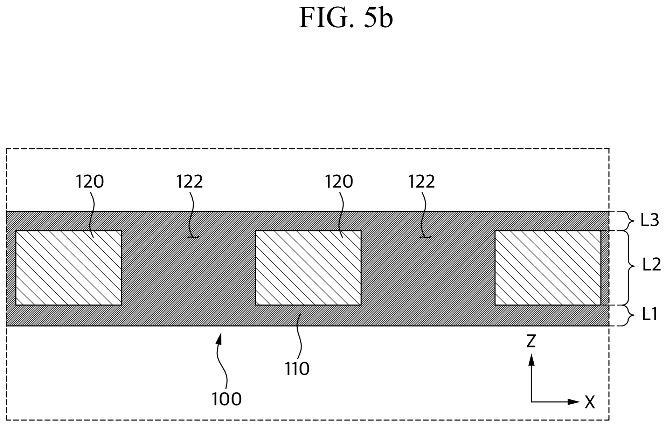

FIG. 5 is an exemplary cross-sectional view of the electrode plate 100 for the secondary battery according to an exemplary embodiment.

The electrode plate 100 for the secondary battery according to exemplary embodiments may be used to manufacture the negative electrode plate 11 of FIG. 2 or the positive electrode plate 12 of FIG. 2 of the battery cell 1 of FIG. 1. For example, the negative electrode plate 11 illustrated in FIG. 1 and FIG. 2 may be made of the electrode plate 100 for the secondary battery illustrated in FIGS. 3 to 5.

The electrode plate 100 for the secondary battery illustrated in FIG. 3 may be a punched-out portion of the electrode plate 100 for the secondary battery that extends in one direction (for example, an X-axis direction).

The electrode plate 100 for the secondary battery according to exemplary embodiments may include an electrode plate body part 110 made of a metal material and a reinforcing member 120 coupled to the electrode plate body part 110.

The electrode plate body part 110 may form an external shape of the electrode plate 100 for the secondary battery. An electrode tab 110a may be placed at one edge of the electrode plate body part 110. For example, referring to FIG. 3, the electrode plate body part 110 may have an integrated structure with the electrode tab 110a protruding on one side. When the negative electrode plate 11 of FIG. 1 and FIG. 2 is manufactured as the electrode plate 100 for the secondary battery, the electrode tab 110a of the electrode plate 100 for the secondary battery may correspond to the electrode tab 11a of the negative electrode plate 11.

The metal material forming the electrode plate body part 110 may be lithium or an alloy including lithium. When the electrode plate body part 110 forming the external shape of the electrode plate 100 for the secondary battery is made of lithium or the alloy including lithium, the negative electrode plate 11 omitting an existing metal current collector made of nickel (Ni), aluminum (Al), copper (Cu), and the like may be implemented and thus the energy density of the battery cell 1 may be greatly increased.

However, when the electrode plate 100 for the secondary battery is made only of the lithium metal, due to low strength of the lithium metal, the electrode plate 100 for the secondary battery may be easily deformed or broken during a manufacturing process, which may cause a process inefficiency during a roll-to-roll process.

To address this, the electrode plate 100 for the secondary battery according to exemplary embodiments may further include the reinforcing member 120 coupled to the electrode plate body part 110.

The reinforcing member 120 may be inserted and coupled to the inside of the electrode plate body part 110. The reinforcing member 120 may be pressed by an external pressure while seated on one surface of the electrode plate body part 110 and inserted into and coupled to the inside of the electrode plate body part 110.

The reinforcing member 120 may be provided with a plurality of pore parts 122 open in a thickness direction (for example, a Z-axis direction of FIG. 3) of the reinforcing member 120. At least one of the plurality of pore parts 122 may be filled with the metal material constituting the electrode plate body part 110 during a process of coupling the reinforcing member 120 to the electrode plate body part 110.

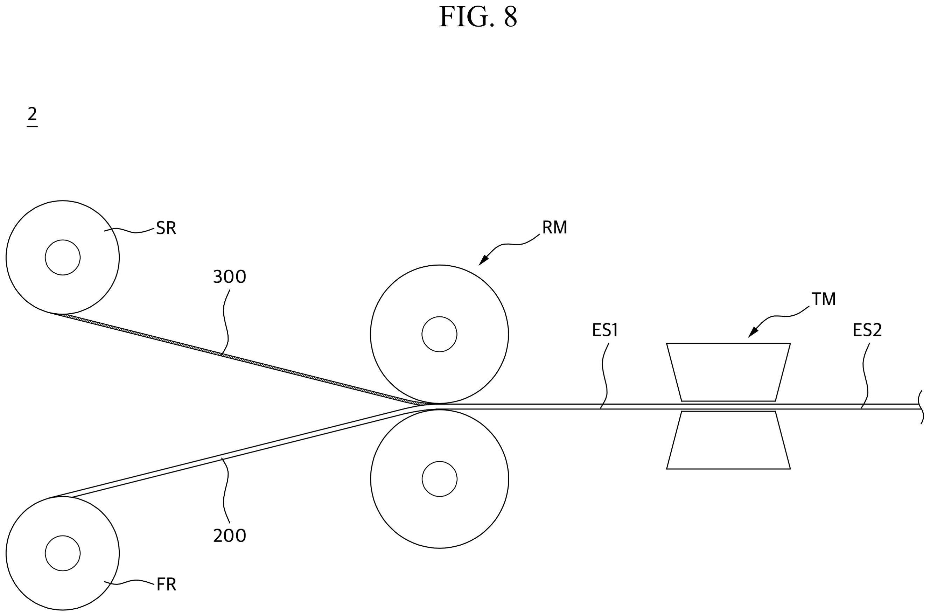

For example, when the electrode plate body part 110 is made of lithium with low hardness or an alloy including the lithium, if the reinforcing member 120 and the electrode plate body part 110 are in contact with each other and pressed with a pressing member (for example, PM of FIG. 8), the reinforcing member 120 may penetrate into the inside of the electrode plate body part 110 and be coupled mutually. In this process, the metal material (for example, lithium or the alloy including lithium) forming the electrode body part 110 may enter between the pore parts 122 of the reinforcing member 120 and fill the pore parts 122.

The reinforcing member 120 may be coupled to the electrode plate body part 110 and may perform the role of increasing a mechanical strength of the electrode plate body part 110. In particular, the reinforcing member 120 may include a tab reinforcement part 120a coupled to the electrode tab 110a placed at one side of the electrode plate body part 110. The mechanical strength of the electrode tab 110a may be increased by the tab reinforcement part 120a of the reinforcing member 120, and thus, an ultrasonic welding process with the lead tab 20 may proceed more easily.

The reinforcing member 120 may have a mesh structure with the plurality of pore parts 122. For example, referring to FIG. 4, the mesh structure of the reinforcing member 120 may be formed by weaving a fiber 121 that is thin and light. The plurality of pore parts 122 may be formed between the fibers 121. However, a structure of the reinforcing member 120 is not limited to a woven mesh structure described above. The reinforcing member 120 may be made of any structure as long as it is a structure with a thickness that is sufficiently thin such that it can be inserted and coupled to the electrode plate body part 110 and the plurality of pore parts 122.

The fiber 121 constituting the reinforcing member 120 may be a resin fiber made of polyethylene or polyamide or a metal fiber with a higher strength than the lithium metal. However, a material of the fiber 121 constituting the reinforcing member 120 is not limited to those described above and may be made of any material that has a strength sufficient to be pressed by the pressing member PM and inserted into the inside of the electrode plate body part 110.

FIG. 5 illustrates various cross-sectional structures of the electrode plate 100 for the secondary battery along section II-II' of FIG. 3 in a state in which the electrode plate body part 110 and the reinforcing member 120 are coupled as described above.

Referring to (a) of FIG. 5, the reinforcing member 120 may be inserted into and coupled to the inside of the electrode plate body part 110 through the one surface of the electrode plate body part 110. In a process of coupling the reinforcing member 120 and the electrode plate body part 110, the metal material of the electrode plate body part 110 may penetrate between the pore parts 122 of the reinforcing member 120 and fill the pore part 122 and the reinforcing member 120 may have a portion exposed on the one surface of the electrode plate body part 110. Accordingly, since an area where the metal material of the electrode plate body part 110 is exposed is reduced on the one surface of the electrode plate body part 110, the occurrence of a sticking phenomenon may be suppressed in a portion where a manufacturing apparatus of the electrode plate 100 for the secondary battery and the one surface of the electrode plate body part 110 are in direct contact with each other.

In this case, the electrode plate 100 for the secondary battery may have a multi-layer structure in which a first layer L1 made of the metal material of the electrode plate body part 110, and a second layer L2 made of the reinforcing member 120 and a metal material that fills the pore parts 122 is disposed thereon.

Alternatively, the reinforcing member 120 may also be coupled in a fully inserted state, that is, in an embedded form, into the inside of the electrode plate body part 110. For example, referring to (b) of FIG. 5, the reinforcing member 120 may be coupled to the electrode plate body part 110 in a state in which the metal material of the electrode plate body part 110 passes through the pore parts 122 of the reinforcing member 120 and encompasses the reinforcing member 120. Accordingly, the metal material of the electrode plate body part 110 may cover both one surface of the reinforcing member 120 and another surface opposite to the one surface.

In this case, referring to (b) of FIG. 5, the electrode plate 100 for the secondary battery may have a multi-layer structure in which the second layer L2 made of the reinforcing member 120 and the metal material that fills the pore parts 122 is formed between the first layer L1 and a third layer L3 made of the metal material of the electrode plate body part 110.

In this case, the reinforcing member 120 is embedded inside the electrode plate body part 110, and only the metal material of the electrode plate body part 110 is exposed on a surface of the electrode plate 100 for the secondary battery, thereby minimizing a change in the electrical properties of the surface of the electrode plate 100 caused by the reinforcement member 120.

The second layer L2 illustrated in (a) of FIG. 5 or (b) of FIG. 5 may function as a reinforcement layer of the electrode plate 100 for the secondary battery. That is, the second layer L2 formed by bonding the electrode plate body part 110 and the reinforcing member 120 in the electrode plate 100 for the secondary battery may prevent the electrode plate 100 for the secondary battery from being easily deformed or broken during an electrode assembly process and may prevent the metal material forming the electrode plate body part 110 from sticking to an electrode manufacturing apparatus. Accordingly, the mechanical strength of the electrode plate 100 for the secondary battery may be dramatically increased compared to a case where the electrode plate 100 for the secondary battery is made of only a soft metal material such as the lithium metal and the efficiency of the manufacturing process may be increased.

Alternatively, the reinforcing member 120 may be provided with a thickness corresponding to the thickness of the electrode plate body part 110 (here, the thickness may refer to a length of the Z-axis direction of FIG. 5). In this case, as the reinforcing member 120 is inserted and coupled to the electrode plate body part 110, the mesh structure may be formed in which the reinforcing member 120 forms the basic skeleton of the electrode plate 100 for the secondary battery, and the pore parts 122 are filled with the metal material forming the electrode plate body part 110.

In this way, when manufacturing the negative electrode plate 11 using the electrode plate 100 for the secondary battery to which the reinforcing member 120 is bonded, mechanical strength, including tensile strength, of the negative electrode plate 11 may be increased, and thus the manufacturing processability of the electrode assembly 10 may be improved. In particular, as illustrated in FIG. 2, when the negative electrode plate 11 is formed by bending one sheet of the electrode plate 100 for the secondary battery a plurality of times, if the negative electrode plate 11 is manufactured using the electrode plate 100 for the secondary battery to which the reinforcing member 120 is bonded, a risk of the negative electrode plate 11 being torn or cracked during the manufacturing process of the negative electrode plate 11 may be greatly reduced.

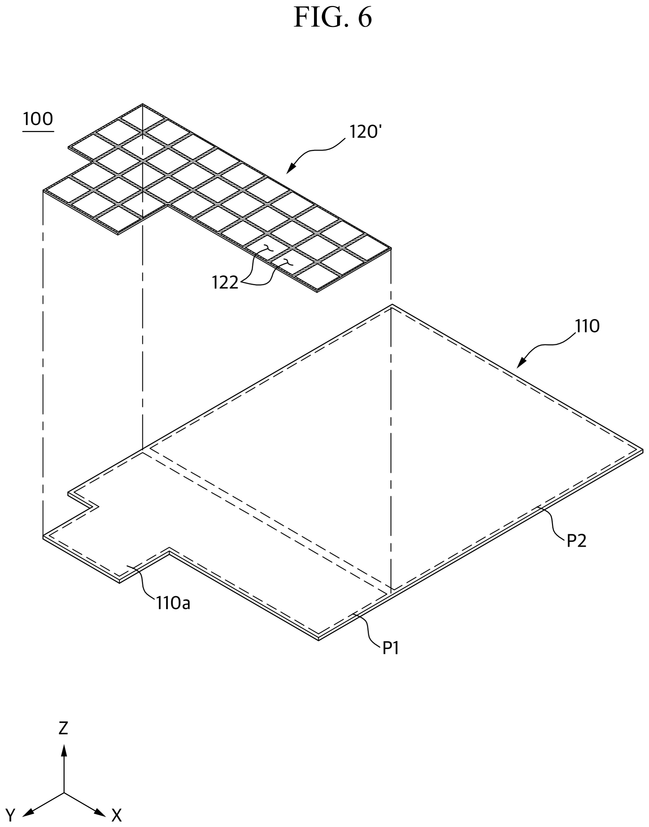

In another exemplary embodiment, a reinforcing member 120' of FIG. 6 may be coupled to only a portion of the electrode plate body part 110. In particular, since the electrode tab 110a of the electrode plate for the secondary battery not only has a structure that protrudes from an edge of the electrode plate for the secondary battery but also may require a higher strength reinforcement in an area where it is coupled to the lead tab 20 compared to other parts of the electrode plate for the secondary battery, so the reinforcing member may be configured to intensively reinforce a portion where the electrode tab 110a is placed. Hereinafter, with reference to FIG. 6, an electrode plate 100' for a secondary battery according to another exemplary embodiment is described.

FIG. 6 is an exploded perspective view of the electrode plate 100' for the secondary battery according to another example embodiment.

Compared to the electrode plate 100 for the secondary battery described above through FIG. 3 to FIG. 5, the electrode plate 100' for the secondary battery illustrated in FIG. 6 has all the same characteristics except a size of the reinforcing member 120' and a region where the reinforcing member 120' is coupled to the electrode plate body part 110, so descriptions overlapping with FIGS. 3 to 5 may be omitted.

Referring to FIG. 6, one surface of the electrode plate body part 110 may be divided into a first region P1 formed along one edge at which the electrode tab 110a is placed and a second region P2 formed along an edge opposite to the one edge. That is, the first region P1 of the electrode plate body part 110 may be a region including the electrode tab 110a on the one surface of the electrode plate body part 110.

In an exemplary embodiment, the reinforcing member 120' may be coupled to the first region P1 of the electrode plate body part 110. For example, in a manufacturing process of the electrode plate 100' for the secondary battery, the reinforcing member 120' may be pressed by an external force and may be inserted into and coupled to the electrode plate body part 110 while being aligned on the first region P1 so as not to overlap the second region P2 of the electrode plate body part 110.

Accordingly, mechanical strength of the electrode tab 110a of the electrode plate 100' for the secondary battery may be effectively reinforced using the reinforcing member 120' that is relatively smaller in size.

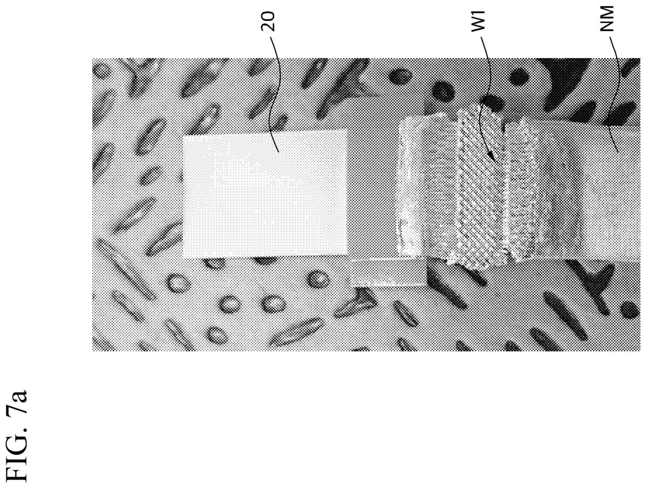

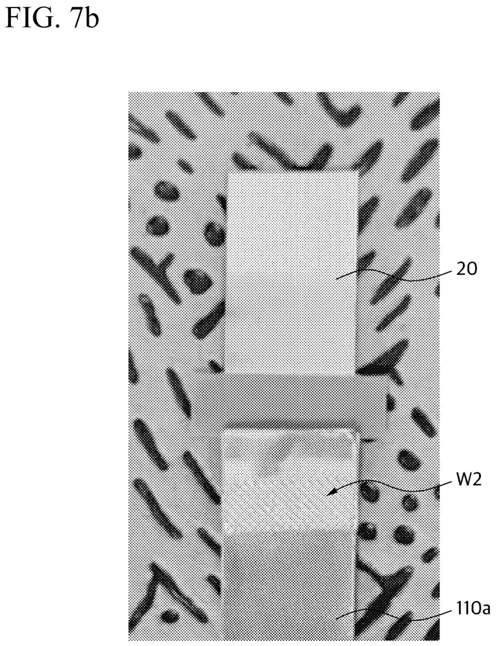

The electrode plates 100, 100' for the secondary battery according to exemplary embodiments may include the electrode tab 110a reinforced by the reinforcing members 120, 120' and thus the stability of a coupling structure and the efficiency of a coupling process may be increased when coupled to the lead tab 20. Hereinafter, with reference to FIG. 7, the advantages of such electrode plates 100, 100' for the secondary battery will be described in detail.

FIG. 7 is a reference diagram illustrating the electrode tab 110a according to exemplary embodiments and the electrode tab 110a according to a comparative example, each coupled to the lead tab 20.

(a) of FIG. 7 illustrates that an electrode tab NM according to the comparative example and the lead tab 20 are coupled by ultrasonic welding, and (b) of FIG. 7 illustrates the electrode tab 110a according to exemplary embodiments and the lead tab 20 coupled by ultrasonic welding.

The electrode tab 110a according to exemplary embodiments corresponds to any one of the electrode tabs 110a of the electrode plates 100, 100' for the secondary battery described above in FIGS. 3 to 6, and may be one in which the reinforcing members 120, 120' are coupled to lithium or an alloy including lithium. On the other hand, the electrode tab NM according to the comparative example, similarly to the electrode tab 110a according to exemplary embodiments, may be made of lithium or the alloy including lithium, but may not be coupled to the reinforcing members 120, 120'.

The lead tab 20 described in FIG. 7 may correspond to the lead tab 20 described above through FIG. 1.

In an ultrasonic welding process, base materials (that is, the electrode tab 110a and the lead tab 20) are placed between a horn and an anvil, and then vibration friction is applied to couple base materials to each other, and in this process, continuous pressure is applied to the electrode tab 110a. Accordingly, when the electrode tab 110a is made of a soft metal material such as lithium or a lithium alloy, there is a risk of being easily deformed by the pressure applied in the ultrasonic welding process.

In particular, in the case of the electrode tab NM made only of lithium or the lithium alloy, as illustrated in (a) of FIG. 7, a phenomenon is observed where a weld part W1 of the electrode tab NM is unintentionally spread thin or torn out due to the pressure applied in the ultrasonic welding process. In particular, when the weld part W1 of the electrode tab NM is spread wider than an original width of the electrode tab NM, there is a risk of causing interference with other components of the battery cell 1.

On the other hand, as illustrated in (b) of FIG. 7, a mechanical strength of the electrode tab 110a according to exemplary embodiments is reinforced by the reinforcing member 120, and thus an unfolding phenomenon caused by the pressure applied in the ultrasonic welding process is significantly reduced, and accordingly, a phenomenon of damage to a weld part W2 is not observed. In particular, since the weld part W2 of the electrode tab 110a is not easily deformed by the pressure of ultrasonic welding, the ultrasonic welding may be performed at a higher output, so the welding strength between the electrode tab 110a and the lead tab 20 may increase dramatically.

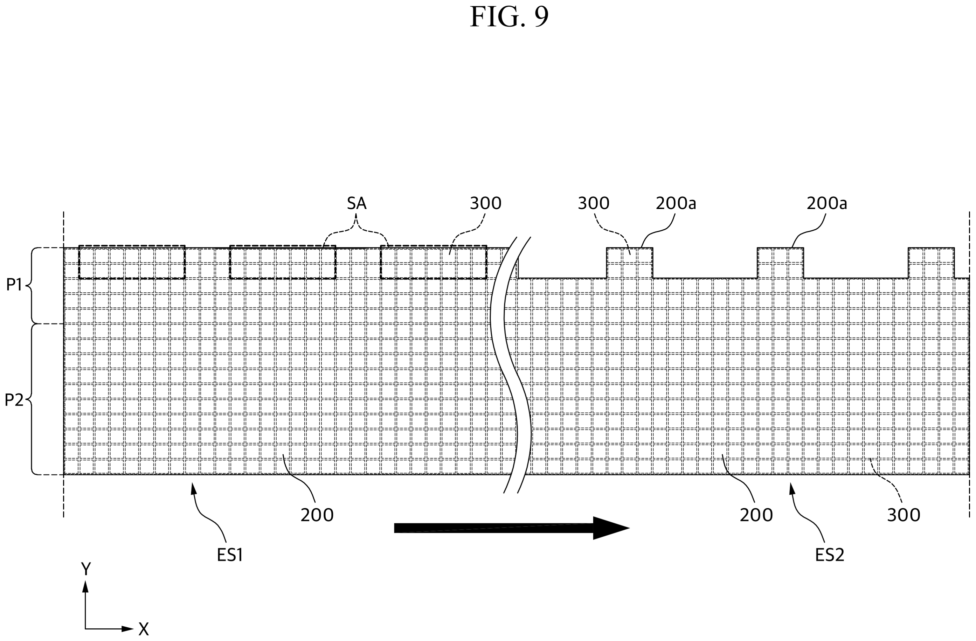

Hereinafter, with reference to FIGS. 8 and 9, a method of manufacturing an electrode plate for a secondary battery according to exemplary embodiments will be described in detail.

FIG. 8 illustrates an exemplary configuration of a manufacturing apparatus 2 of an electrode plate for a secondary battery to produce the electrode plate for the secondary battery according to exemplary embodiments.

FIG. 9 illustrates an electrode tab being formed at an electrode plate for a secondary battery according to exemplary embodiments.

The manufacturing apparatus 2 of the electrode plate for the secondary battery may include a first roll FR on which a first base material 200 is wound and a second roll SR on which a second base material 300 coupled to the first base material 200 is wound.

The first base material 200 may be made of a metal material. Here, the first base material 200 may be processed into the electrode plate body part 110 described above in FIG. 3 to FIG. 6 during a manufacturing process of the electrode plates 100, 100' of FIGS. 3 to 6 for the secondary battery. Accordingly, the description of a material of the first base material 200 may refer to the description of the material of the electrode plate body part 110 described above in FIGS. 3 to 6. That is, the first base material 200, similarly to the electrode plate body part 110, may be made of lithium or an alloy including lithium.

The second base material 300 may have a mesh structure provided with the plurality of pore parts 122 of FIGS. 3 to 6. The second base material 300 may be processed into the reinforcing members 120, 120' described in FIGS. 3 to 7 during the manufacturing process of the electrode plates 100, 100' for the secondary battery. Accordingly, the detailed description of the mesh structure of the second base material 300 may refer to the description of the mesh structure of the reinforcing members 120, 120' described above in FIGS. 3 to 7.

The first base material 200 and the second base material 300 may be unwound from the first roll FR and the second roll SR, respectively, and supplied to the pressing member PM in a mutually aligned state.

In a pressing process, the first base material 200 and the second base material 300 are coupled to each other to form a first electrode structure ES1. For example, referring to FIG. 8, in the pressing process, the first base material 200 and the second base material 300 are pressed by the pressing members PM while passing between the pressing members PM placed side by side up and down, and accordingly, the second base material 300 may be inserted into and coupled to the first base material 200.

In a process of inserting the second base material 300 into the first base material 200, the metal material forming the first base material 200 may fill the pore parts 122 of the second base material 300. In particular, when the first base material 200 is made of lithium with low hardness or an alloy including the lithium, through a process of pressing with the pressing member PM while the first base material 200 and the second base material 300 are in contact with each other, lithium or the alloy including lithium penetrates into and fills the plurality of pore parts 122 of the second base material 300, and accordingly, the first base material 200 and the second base material 300 are tightly coupled to each other.

The second base material 300 may also be coupled only to a portion of the first base material 200. For example, one surface of the first base material 200 may be divided into the first region P1 and the second region P2 along a width direction (a Y-axis direction), and the second base material 300 may be provided to have a narrower width than the first base material 200 and may be coupled only to the first region P1 of the first base material 200. In the manufacturing process of the electrode plate 100' for the secondary battery after the pressing process, the first region P1 of the first base material 200 to which the second base material 300 is coupled may be processed to form the electrode tab 110a of the electrode plate 100' for the secondary battery, and for a specific shape and a characteristic of the electrode plate 100' for the secondary battery manufactured according to this, the description of FIG. 6 may be referenced.

The first electrode structure ES1 formed through the pressing process may be put into a tab forming process.

In FIG. 8, the pressing process and the tab forming process are illustrated to proceed consecutively, but this is merely an example, and the pressing process and the tab forming process may each be performed in a separate process line. For example, the first electrode structure ES1 after completing the pressing process may be wound on a separate rewinder roll (not illustrated) and this rewinder roll (not illustrated) may be transferred to another location and then unwound to supply the first electrode structure ES1 to the tab forming process.

In the tab forming process, the first electrode structure ES1 is processed to manufacture a second electrode structure ES2 provided with an electrode tab 200a.

In the tab forming process, the electrode tab 200a may be formed by removing a scrap area SA formed on the first region P1 of the first base material 200. For example, referring to FIG. 9, while the first electrode structure ES1 in which the first base material 200 and the second base material 300 are coupled is transferred in one direction and passes through a tab forming member TM, the scrap area SA is removed and the electrode tab 200a is formed (An arrow at the bottom of FIG. 9 indicates a transfer direction of the first electrode structure ES1)). A plurality of the scrap areas SA are set in a portion of an edge area of the first area P1 of the first base material 200 to which the second base material 300 is coupled, and as the scrap area SA is removed, the electrode tab 200a is formed, which protrudes from one edge of the first base material 200. The electrode tab 200a formed according to this may correspond to the electrode tab 110a described above through FIGS. 3 to 7.

To remove the scrap area SA, a notching technique using a cutting laser or an ultrasonic notching manner using an ultrasonic cutting device may be applied. However, in addition to the above-described manner, any technique may be applied to cutting the scrap area as long as it may effectively cut a portion of an area of the first electrode structure ES1.

The second electrode structure ES2 on which the electrode tab 200a is formed may be put into an assembly process of an electrode assembly. In the assembly process of the electrode assembly, the electrode assembly (for example, 10 of FIG. 1 and FIG. 2) is manufactured by stacking the second electrode structure ES2 and an electrode plate having an opposite polarity thereof (for example, 12 of FIG. 2).

The tab forming process and the assembly process of the electrode assembly may be performed consecutively. Alternatively, the second electrode structure ES2 after passing the tab forming process may be wound on a separate rewinder roll (not illustrated) and then transferred to another location and put into the assembly process of the electrode assembly.

The above method for manufacturing the electrode plates 100, 100' for the secondary battery according to the manufacturing apparatus 2 of the electrode plate for the secondary battery is summarized as follows.

First, the first base material supplying in which the first base material 200 is supplied and the second base material supplying in which the second base material 300 is supplied are performed. The supplied second base material 300 may be supplied to the pressing member PM in an aligned state on one surface of the first base material 200. If necessary, the manufacturing apparatus 2 of the electrode plate for the secondary battery may further include one or more guide rolls (not illustrated) to effectively perform the aligning.

In the pressing, a pressing process is performed in which the second base material 300 is inserted and coupled to the first base material 200 by the pressing member PM. Accordingly, the second base material 300 is coupled to the first base material 200 with the plurality of pore parts 122 filled with the metal material of the first base material 200.

The first base material 200 and the second base material 300 that are bonded to each other in the pressing are put into the tab forming. In the tab forming, the scrap area SA formed on the first region P1 of the first base material 200 is removed and the electrode tab 200a is formed.

Through the above process, the electrode plate 100, 100' for the secondary battery in which the first base material 200 made of the metal material and the second base material 300 of the mesh structure are bonded to each other may be manufactured.

The electrode plates 100, 100' for the secondary battery according to exemplary embodiments may include the reinforcing members 120, 120' coupled to the electrode plate body part 110 made of lithium or the lithium alloy, and thus a mechanical rigidity may be greatly increased, and accordingly, the structural stability of the electrode assembly 10 may be increased.

In addition, the electrode plates 100, 100' for the secondary battery to which the reinforcing members 120, 120' are coupled have an excellent mechanical strength, so the electrode plates 100, 100' may be easily handled during the manufacturing process of the battery cell 1, and thus the manufacturing efficiency of the battery cell 1 may be increased. In particular, the electrode plates 100, 100' for the secondary battery to which the reinforcing members 120, 120' are coupled may effectively prevent an adhesion problem between the electrode tab 110a made of the lithium metal and the welding device during the ultrasonic welding process with the lead tab 20, and as a result, not only is the welding process efficiency increased, but the maintenance of the welding device is also easier, which may lead to a reduction in a fabrication cost.

Additionally, since the mechanical strength of the electrode plates 100, 100' for the secondary battery is increased by the reinforcing members 200, 200', the roll-to-roll process may be performed stably during the manufacturing process of the battery cell 1, and thus the manufacturing efficiency of the electrode assembly 10 and the battery cell 1 may be greatly increased.

Although various exemplary embodiments of the present disclosure have been described in detail above, the scope of the present disclosure is not limited thereto, and it will be apparent to those skilled in the art that various modifications and variations may be made without departing from the technical idea of the present disclosure as defined in the claims. Additionally, the above-described exemplary embodiments may be implemented by deleting some components, and each embodiment may be implemented in combination with each other.

### [Explanation of symbols]

1... Battery cell; 10... Electrode assembly;
11... Negative electrode plate; 12... Positive electrode plate;
13... Separator; 20... Lead tab;
21... Insulating member; 30... Case;
100, 100'... Electrode plate for secondary battery; 110... Electrode plate body part;
110a... Electrode tab; 120, 120'... Reinforcing member;
120a... Tab reinforce part; 122... Pore part;
200... First base material; 300... Second base material;
FR... First roll; SR... Second roll;
PM... Pressing member; TM... Tab forming member;
ES1... First electrode structure; ES2... Second electrode structure

## Claims

1. A method of manufacturing an electrode plate for a secondary battery, the method comprising:
supplying a first base material made of a metal material;
supplying a second base material having a mesh structure with a plurality of pore parts;
aligning the second base material on one surface of the first base material; and
pressing the first base material and the second base material with a pressing member, wherein the second base material is pressed into the first base material.

2. The method of claim 1,
wherein, in the pressing, as the second base material is pressed into the first base material, the metal material forming the first base material fills at least some of the plurality of pore parts.

3. The method of claim 1,
wherein the one surface of the first base material is divided into a first region and a second region along a width direction of the first base material, and
wherein, in the aligning, the second base material is aligned on the first region so as not to overlap the second region of the first base material.

4. The method of claim 3,
further comprising forming an electrode tab by removing a scrap area on the first region of the first base material,
wherein the tab forming is performed after the pressing.

5. The method of claim 1,
wherein the metal material is lithium or an alloy including lithium.

6. An electrode plate for a secondary battery, comprising:
an electrode plate body part made of a metal material and having one or
more electrode tabs located at one edge; and
a reinforcing member having a plurality of pore parts and being inserted into and coupled to the electrode plate body part,
wherein the metal material forming the electrode plate body part fills at least some of the plurality of pore parts.

7. The electrode plate for the secondary battery of claim 6,
wherein the reinforcing member comprises a tab reinforcement part coupled to the one or more electrode tabs.

8. The electrode plate for the secondary battery of claim 6,
wherein one surface of the electrode plate body part is divided into a first region formed along the one edge at which the one or more electrode tabs are placed; and
a second region formed along an edge opposite to the one edge,
wherein the reinforcing member is inserted and coupled to the first region.

9. The electrode plate for the secondary battery of claim 6,
wherein the metal material of the electrode plate body part covers both one surface of the reinforcing member and another surface opposite to the one surface.

10. The electrode plate for the secondary battery of claim 6,
wherein a portion of the reinforcing member is exposed on one surface of the electrode plate body part.

11. The electrode plate for the secondary battery of claim 6,
wherein the metal material is lithium or an alloy including lithium.

12. A battery cell comprising:
an electrode assembly including one or more positive electrode plates, one or more negative electrode plates, and one or more separators placed between the one or more positive electrode plates and the one or more negative electrode plates; and
a case in which the electrode assembly is accommodated,
wherein the one or more negative electrode plates comprise the electrode
plate for the secondary battery according to claim 6.

13. The battery cell of claim 12,
wherein at least one of the one or more negative electrode plates is formed by bending one sheet of the electrode plate for the secondary battery a plurality of times.

14. The battery cell of claim 12,
further comprising a lead tab coupled to the electrode tab of the one or more negative electrode plates by ultrasonic welding.
